# FASCICULE DE BREVET EUROPEEN

(11) **EP 1 034 019 B1**
(45) Date de publication et mention de la délivrance du brevet: **12.02.2003**
(21) Numéro de dépôt: 98954543.9
(22) Date de dépôt: 09.11.1998
(51) Int. Cl.: B01D 3/00

(54) **DISTRIBUTEUR DE LIQUIDE POUR COLONNE DE DISTILLATION, ET COLONNE DE DISTILLATION CORRESPONDANTE**
FLÜSSIGKEITSVERTEILER FÜR OSZILLIERENDE DESTILLATIONSKOLONNE UND EINE SOLCHE DESTILLATIONSKOLONNE
LIQUID DISPENSER FOR DISTILLING COLUMN, AND CORRESPONDING DISTILLING COLUMN

(30) Priorité: 17.11.1997 FR 9714382
(43) Date de publication de la demande: 13.09.2000
(73) Titulaire: L'air Liquide, S.A. à Directoire et Conseil de Surveillance pour l'Etude et l'Exploitation des Procédés Georges Claude, 75321 Paris Cedex 07 (FR)
(72) Inventeur: DARREDEAU, Bernard, F-78500 Sartrouville (FR); LEHMAN, Jean-Yves, F-94700 Maisons Alfort (FR)
(74) Mandataire: Mercey, Fiona Susan
(86) Numéro de dépôt international: FR9802390
(87) Numéro de publication internationale: WO99025447

(56) Documents cités:
- DE-B- 1 113 680
- GB-A- 2 039 779
- GB-A- 2 062 489
- US-A- 4 776 989

## Description

La présente invention est relative à un distributeur de liquide pour colonne de distillation. Elle s'applique en particulier aux colonnes de distillation d'air embarquées sur des structures flottantes telles que des plates-formes pétrolières flottantes ou des barges.

Les pressions dont il est question ci-dessous sont des pressions absolues.

Les plates-formes pétrolières flottantes produisent des gaz résiduaires. Pour des raisons économiques et environnementales, il devient de plus en plus nécessaire de récupérer ces gaz. Une méthode consiste en leur conversion en hydrocarbures plus lourds , sous forme liquide et donc plus facilement transportables, par le procédé Fischer-Tropsch, lequel consomme de grandes quantités d'oxygène.

Il serait donc intéressant de pouvoir embarquer une colonne de distillation d'air sur une plate-forme flottante ou une barge, mais le bon fonctionnement d'un tel équipement se heurte à de sérieuses difficultés. Ainsi, un premier impératif est que le liquide soit uniformément distribué en tête de colonne sur toute la section de celle-ci malgré les oscillations de son axe dues à la houle.

L'invention a pour but de fournir un distributeur de liquide dont le fonctionnement soit très peu sensible à de telles oscillations.

A cet effet, l'invention a pour objet un distributeur de liquide pour colonnes de distillation, caractérisé en ce qu'il comprend :
- un distributeur primaire, qui délimite un volume clos muni d'ouvertures de prédistribution de liquide qui débouchent dans la colonne;
- des moyens d'alimentation du distributeur primaire en liquide sous une pression nettement supérieure à la pression intérieure de la colonne; et
- un distributeur secondaire qui occupe sensiblement toute la section de la colonne, qui comporte un ciel gazeux en communication avec l'espace intérieur de la colonne et qui est subdivisé par des cloisons en une pluralité de compartiments dont chacun reçoit du liquide en provenance d'au moins l'une desdites ouvertures du distributeur primaire, ce distributeur secondaire comportant un fond muni d'orifices de distribution fine du liquide sur pratiquement toute la section de la colonne, ces orifices étant en nombre très supérieur au nombre d'ouvertures du distributeur primaire.

Le distributeur selon l'invention peut comporter une ou plusieurs des caractéristiques suivantes :
- chaque compartiment reçoit du liquide d'une ouverture unique du distributeur primaire;
- tous les compartiments ont sensiblement la même aire et le même taux de perforation;
- le distributeur primaire comprend un réseau de tubes perforés;
- le réseau de tubes perforés comprend une série de tubes perforés parallèles dont chacun se trouve à l'aplomb d'une goulotte rectiligne du distributeur secondaire;
- lesdits moyens d'alimentation comprennent un séparateur de phases et une conduite de compression et d'alimentation reliée en amont à la partie inférieure de ce séparateur;
- les moyens d'alimentation traversent un sous-refroidisseur.

L'invention a également pour objet une colonne de distillation comprenant un distributeur tel que défini ci-dessus.

Dans un mode de réalisation d'une telle colonne de distillation, ledit distributeur de liquide est disposé à un premier niveau de la colonne, notamment en tête de colonne, et la colonne comporte, à au moins un second niveau, des moyens de collecte du liquide surmontant un second distributeur de liquide tel que défini plus haut et dont le distributeur primaire est relié à des seconds moyens de compression du liquide collecté.

Un mode de réalisation de l'invention va maintenant être décrit en regard du dessin annexé, sur lequel :
- la Figure 1 représente schématiquement, en coupe verticale suivant la ligne I-I de la Figure 2, un distributeur de liquide conforme à l'invention;
- la Figure 2 est une vue schématique en plan de ce distributeur;
- la Figure 3 est une vue partielle analogue à la Figure 1, à plus grande échelle; et
- la Figure 4 illustre schématiquement une colonne de distillation d'air conforme à l'invention, embarquée sur une structure flottante.

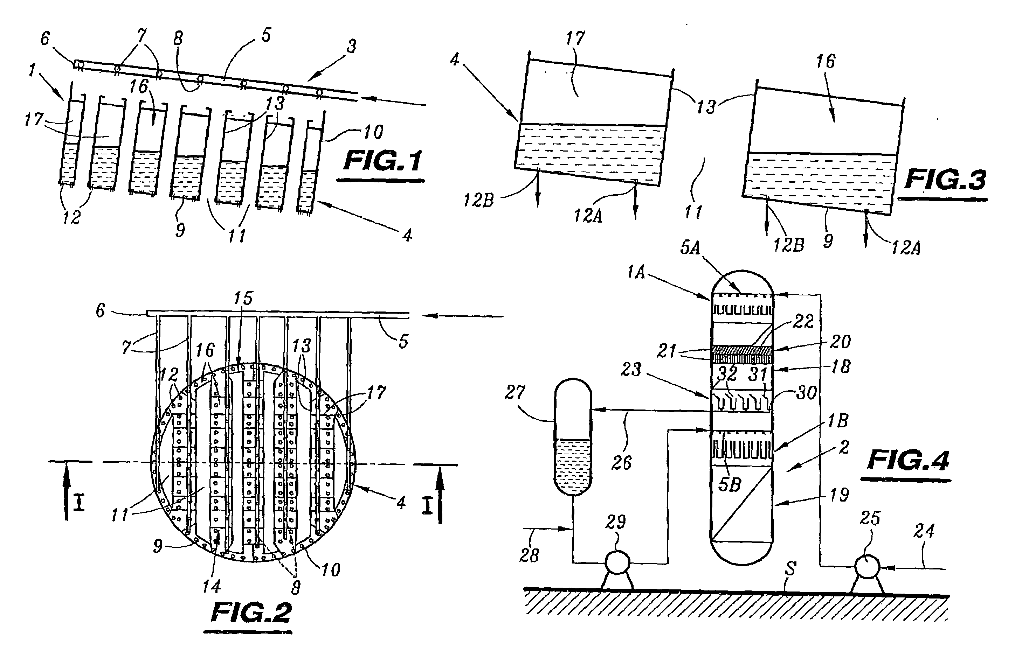

Le distributeur 1 représenté aux Figures 1 et 2 est destiné à être monté en tête d'une colonne 2 de distillation d'air, qui est schématisée sur la Figure 4 en tant que colonne basse pression d'une double colonne de distillation d'air.

Le distributeur 1 est constitué de deux parties, à savoir un distributeur primaire 3 et un distributeur secondaire 4 disposé au-dessous.

Le distributeur primaire 3 est constitué d'un tube 5 formant collecteur d'alimentation, obturé à une extrémité 6, d'où partent perpendiculairement plusieurs tubes perforés 7 horizontaux, parallèles entre eux, obturés à leur extrémité opposée au collecteur. Chaque tube 7 comporte sur sa génératrice inférieure plusieurs orifices calibrés 8 tous identiques et dont le diamètre est compris entre 2 et 5 mm.

Dans l'exemple représenté, il est prévu sept tubes 7, et le nombre d'orifices 8 est quatre pour les deux tubes extrêmes, douze pour le tube central et dix pour les quatre autres tubes. En tout état de cause, le nombre total n d'orifices des tubes 7 est très inférieur au nombre N de trous de distribution de liquide nécessaire pour assurer une distribution suffisamment uniforme du liquide sur la section de la colonne 2, ce nombre N étant typiquement de l'ordre de 1000 à 3000 pour une colonne de 4 m de diamètre. De plus, le diamètre des orifices 8 est suffisant pour éviter tout risque de bouchage par des impuretés contenues dans le liquide à distribuer.

Le distributeur secondaire 4 comporte une cuvette ouverte vers le haut, ayant un fond 9 horizontal et une paroi périphérique cylindrique 10 qui s'élève sur ce fond. Le fond 9 comporte six lumières 11 de forme allongée suivant la direction parallèle aux tubes 7, qui laissent libres d'une part une couronne annulaire périphérique et d'autre part cinq bandes parallèles à ladite direction. Cette couronne et ces bandes sont perforées des N trous 12 précités, lesquels ont, comme les orifices 8, un diamètre suffisant pour éviter tout risque de bouchage.

Chaque lumière 11 est entièrement bordée d'une paroi verticale ascendante 13, ce qui délimite avec la paroi périphérique 10 cinq goulottes rectilignes 14 à l'aplomb des bandes précitées, et une goulotte annulaire périphérique 15 qui communique avec toutes les goulottes 14.

De plus, les goulottes 14 et 15 sont toutes subdivisées en compartiments 16 par un ensemble de parois verticales 17 qui s'étendent entre les parois 13 et entre celles-ci et la paroi périphérique 10.

Les compartiments 16 ont tous la même aire et le même taux de perforation, et chacun d'eux se trouve au-dessous d'un orifice 8 et d'un seul.

La colonne 2 est fixée sur une structure flottante S, schématisée sur la Figure 4, de même que la colonne moyenne pression de la double colonne de distillation (non représentée). On n'a fait figurer sur la Figure 4 que les éléments utiles pour la compréhension de la présente invention, mais la double colonne comporte bien entendu tous les éléments classiques dans la technique.

Plus particulièrement, la colonne 2 est subdivisée en une section supérieure de distillation 18 et une section inférieure de distillation 19, toutes deux constituées de garnissages ondulés-croisés. Comme il est bien connu, un tel garnissage comporte une superposition de tronçons ou packs 20 de garnissage ondulé-croisé, dont chacun a la forme d'une galette cylindrique occupant toute la section de la colonne.

Chaque pack 20 est constitué d'un empilement de bandes ondulées 21 à ondes 22 obliques. Chaque bande comporte un plan général vertical, toutes les bandes ont la même hauteur, et les ondes sont alternativement inclinées dans un sens et dans l'autre d'une bande à la suivante. Ainsi, les ondes des bandes adjacentes se touchent en un grand nombre de points d'intersection. De plus, les packs 20 sont décalés angulairement de 90° d'un pack au suivant par rapport à l'axe général de la colonne. Au-dessus de la section supérieure 18, la colonne contient un distributeur tel que décrit plus haut, qui est le distributeur de tête 1A de la colonne. Au-dessous de la section 18, la colonne contient un dispositif 23 de collectage du liquide issu de cette section de distillation. Au-dessous de ce dispositif 23 et au-dessus de la section de distillation 19 est disposé un second distributeur tel que défini plus haut, qui constitue un distributeur intermédiaire 1B.

En service, du "liquide pauvre" (azote à peu près pur soutiré en tête de la colonne moyenne pression) arrivant via une conduite d'alimentation 24, est comprimé à une pression de l'ordre de 3 bars par une pompe 25 puis introduit dans le collecteur d'alimentation 5A du distributeur 1A. Ce liquide est détendu à une pression de l'ordre de 1,2 bar à travers les orifices 8 et tombe dans les compartiments 16 respectifs. De là, il tombe à travers l'ensemble des trous 12 sur le pack 20 supérieur de la section de distillation 18.

Le liquide issu de cette section 18, enrichi en oxygène, est collecté par le dispositif 23, sorti de la colonne via une conduite 26, et envoyé dans un séparateur de phases 27. Le liquide recueilli dans ce dernier est mélangé avec du "liquide riche" de même composition (air enrichi en oxygène, collecté en cuve de la colonne moyenne pression) provenant de la colonne moyenne pression via une conduite 28. Puis ce liquide est comprimé à la pression précitée de l'ordre de 3 bars par une pompe 29, et introduit dans le collecteur d'alimentation 5B du distributeur 1B. De là, ce liquide est détendu et distribué en deux étapes comme précédemment, pour fournir le reflux de la section de distillation inférieure 19.

Bien entendu, le liquide qui descend dans la colonne 2 se trouve en relation d'échange de matière et de chaleur avec de l'oxygène gazeux obtenu par chauffage d'oxygène liquide, recueilli en cuve de la colonne 2, par de l'azote gazeux de tête de la colonne moyenne pression. Ce gaz s'enrichit progressivement en azote en montant dans la colonne 2.

Les circulations gazeuses n'ont pas été représentées sur la Figure 4, dans un but de clarté. Cependant, on comprend que le gaz montant traverse sans difficulté les distributeurs 1A et 1B à travers les lumières 11 de ceux-ci. De même, le dispositif collecteur 23 comporte des passages permettant ce libre passage ascendant. En effet, il est constitué d'une série de goulottes rectilignes 30 dont chacune comporte une paroi latérale prolongée en oblique vers le haut en 31 pour recouvrir l'intervalle qui la sépare de la goulotte voisine, tout en laissant libre un passage 32 pour le gaz.

Lorsque la structure 18 est en mer, l'axe de la colonne 2 oscille autour de sa position normalement verticale. Les termes "horizontal" et "vertical" utilisés plus haut pour décrire le distributeur 1 doivent s'entendre pour cette position médiane de la colonne, mais, lorsque celle-ci est inclinée, la nappe de tubes 7, le fond 9 et les parois 10, 13 et 17 s'inclinent du même angle, comme représenté sur les Figures 1 et 3.

Grâce à la mise sous pression du liquide dans le distributeur primaire 3, tout se passe comme si les orifices 8 étaient surmontés d'une hauteur de liquide de l'ordre de 20 m, sans bien entendu l'encombrement en hauteur correspondant. Par suite, les variations de hauteur entre les orifices 8 les plus extrêmes ont une très faible influence sur les débits fournis par ces orifices.

De plus, dans chaque compartiment 16, la faible distance séparant les trous 12 (Figure 3) a pour résultat que la hauteur de liquide qui les surmonte varie peu d'un trou à l'autre. On remarque encore qu'à tout instant, les trous 12A fortement alimentés sont voisins de trous 12B faiblement alimentés d'un compartiment adjacent, de sorte que ces deux débits se compensent facilement dans la même région du pack 20 supérieur de la section de distillation immédiatement sous-jacente.

Au total, on obtient sur toute la section de la colonne une distribution du liquide ayant une uniformité satisfaisante même en cas d'inclinaison relativement forte de la colonne.

Pour éviter les phénomènes de flash (formation de vapeur) lors de la détente du liquide dans les orifices 8, il est avantageux de sous-refroidir le liquide comprimé, par tout moyen approprié, notamment par échange de chaleur avec un fluide plus froid, disponible dans l'installation de distillation. Ce fluide peut être de l'azote impur issu de la tête de la colonne, et/ou de l'azote liquide sous une pression inférieure à celle du liquide en question.

Par ailleurs, la compression du liquide à distribuer peut s'obtenir, avec ou sans pompe suivant le cas, en utilisant une hauteur hydrostatique. On remonte alors le liquide jusque dans un séparateur de phases situé à un niveau approprié. On peut faire appel pour cela à un gaz d'entraînement disponible sous une pression suffisamment élevée, et/ou à un effet de thermosiphon par vaporisation partielle du liquide dans un échangeur de chaleur.

Comme on le comprend, l'invention s'applique également à la distribution de liquide de reflux dans une colonne fixe mais dont l'axe n'est pas parfaitement vertical.

Le WO-A-90/10 497 décrit, entre autres, un garnissage analogue aux garnissages ondulés-croisés précités, mais perforé de manière différente. Le terme "garnissage ondulé-croisé" utilisé ici comprend également un tel garnissage, ainsi que tout garnissage analogue.

## Revendications

1. Distributeur de liquide pour colonne de distillation, **caractérisé en ce qu'**il comprend :
- un distributeur primaire (3), qui délimite un volume clos muni d'ouvertures (8) de prédistribution de liquide qui débouchent dans la colonne (2);
- des moyens (5, 5A, 5B, 25, 29) d'alimentation du distributeur primaire (3) en liquide sous une pression nettement supérieure à la pression intérieure de la colonne; et
- un distributeur secondaire (4) qui occupe sensiblement toute la section de la colonne, qui comporte un ciel gazeux en communication avec l'espace intérieur de la colonne et qui est subdivisé par des cloisons (13, 17) en une pluralité de compartiments (16) dont chacun reçoit du liquide en provenance d'au moins l'une desdites ouvertures (8) du distributeur primaire (3), ce distributeur secondaire (4) comportant un fond (9) muni d'orifices (12) de distribution fine du liquide sur pratiquement toute la section de la colonne, ces orifices étant en nombre très supérieur au nombre d'ouvertures (8) du distributeur primaire.

2. Distributeur suivant la revendication 1, **caractérisé en ce que** chaque compartiment (16) reçoit du liquide d'une ouverture unique (8) du distributeur primaire (3).

3. Distributeur suivant la revendication 1 ou 2, **caractérisé en ce que** tous les compartiments (16) ont sensiblement la même aire et le même taux de perforation.

4. Distributeur suivant l'une quelconque des revendications 1 à 3, **caractérisé en ce que** le distributeur primaire (3) comprend un réseau de tubes perforés (7).

5. Distributeur suivant la revendication 4, **caractérisé en ce que** le réseau de tubes perforés (7) comprend une série de tubes perforés parallèles dont chacun se trouve à l'aplomb d'une goulotte rectiligne (14) du distributeur secondaire (4).

6. Distributeur suivant l'une quelconque des revendications 1 à 5, **caractérisé en ce que** lesdits moyens d'alimentation comprennent un séparateur de phases et une conduite de compression et d'alimentation reliée en amont à la partie inférieure de ce séparateur.

7. Distributeur suivant l'une quelconque des revendications 1 à 6, **caractérisé en ce que** les moyens d'alimentation traversent un sous-refroidisseur.

8. Colonne de distillation, **caractérisée en ce qu'**elle comprend un distributeur de liquide (1A, 1B) suivant l'une quelconque des revendications 1 à 7.

9. Colonne de distillation suivant la revendication 8, **caractérisée en ce que** ledit distributeur de liquide (1A) est disposé à un premier niveau de la colonne, notamment en tête de colonne, et **en ce que** la colonne comporte, à au moins un second niveau, des moyens (23) de collecte du liquide surmontant un second distributeur de liquide (1B) suivant l'une quelconque des revendications 1 à 7 et dont le distributeur primaire est relié à des seconds moyens (27, 29) de compression du liquide collecté.

10. Utilisation d'une Colonne de distillation suivant la revendication 8 ou 9 sur une structure flottante (18) telle qu'une plate-forme pétrolière flottante ou une barge.

## Patentansprüche

1. Flüssigkeitsverteiler für eine Destillationskolonne, **dadurch gekennzeichnet, dass** er umfasst:
- einen primären Verteiler (3), der einen abgeschlossenen Rauminhalt begrenzt, welcher mit Öffnungen (8) zur Vorverteilung der Flüssigkeit, die in die Kolonne strömt (2), versehen ist;
- Mittel (5, 5A, 5B, 25, 29) zur Versorgung des primären Verteilers (3) mit Flüssigkeit unter einem Druck, der deutlich höher als der Innendruck der Kolonne ist; und
- einen sekundären Verteiler (4), der im Wesentlichen den gesamten Querschnitt der Kolonne einnimmt, der eine gasförmige Schicht umfasst, welche mit dem Außenraum der Kolonne kommuniziert und der durch Trennwände (13, 17) in eine Vielzahl von Kammern (16) unterteilt ist, von denen jede Kammer Flüssigkeit aus wenigstens einer dieser Öffnungen (8) des primären Verteilers (3) empfängt, wobei dieser sekundäre Verteiler (4) einen Boden (9) umfasst, der mit Öffnungen (12) für eine feine Verteilung der Flüssigkeit über praktisch den gesamten Querschnitt der Kolonne versehen ist, wobei die Anzahl dieser Öffnungen sehr viel größer ist als die Anzahl der Öffnungen (8) des primären Verteilers.

2. Verteiler nach Anspruch 1, **dadurch gekennzeichnet, dass** jede Kammer (16) Flüssigkeit von einer einzigen Öffnung (8) des primären Verteilers (3) empfängt.

3. Verteiler nach Anspruch 1 oder 2, **dadurch gekennzeichnet, dass** alle Kammern (16) im Wesentlichen die gleiche Querschnittsfläche und die gleiche Perforationsrate aufweisen.

4. Verteiler nach einem der Ansprüche 1 bis 3, **dadurch gekennzeichnet, dass** der primäre Verteiler (3) ein Netz von perforierten Rohren (7) umfasst.

5. Verteiler nach Anspruch 4, **dadurch gekennzeichnet, dass** das Netz aus perforierten Rohren (7) eine Reihe von parallel verlaufenden, perforierten Rohren umfasst, von denen jedes senkrecht zu einer rechteckigen Rinne (14) des sekundären Verteilers (4) steht.

6. Verteiler nach einem der Ansprüche 1 bis 5, **dadurch gekennzeichnet, dass** diese Mittel zur Versorgung eine Vorrichtung zur Phasentrennung und eine Kompressions- und Versorgungsleitung, die stromaufwärts von dem unteren Teil dieser Trennvorrichtung angeschlossen ist, umfassen.

7. Verteiler nach einem der Ansprüche 1 bis 6, **dadurch gekennzeichnet, dass** die Mittel zur Versorgung eine untergeordnete Kühlvorrichtung durchlaufen.

8. Destillationskolonne, **dadurch gekennzeichnet, dass** sie einen Flüssigkeitsverteiler (1A, 1B) nach einem der Ansprüche 1 bis 7 umfasst.

9. Destillationskolonne nach Anspruch 8, **dadurch gekennzeichnet, dass** dieser Flüssigkeitsverteiler (1A) auf einem ersten Niveau der Kolonne und insbesondere am Kopf der Kolonne angeordnet ist und dass die Kolonne auf wenigstens einem zweiten Niveau zur Sammlung der Flüssigkeit Mittel (23) umfasst, die einen zweiten Flüssigkeitsverteiler (1B) nach einem der Ansprüche 1 bis 7 überragen, und wobei der primäre Verteiler an sekundäre Mittel (27, 29) zur Kompression der gesammelten Flüssigkeit angeschlossen ist.

10. Einsatz einer Destillationskolonne gemäß Anspruch 8 oder 9 auf einer schwimmenden Konstruktion (18) wie beispielsweise einer schwimmenden Ölplattform oder einem Fahrzeug ohne Eigenantrieb.

## Claims

1. Liquid distributor for a distillation column, **characterized in that** comprises:
- a primary distributor (3), which defines a closed volume provided with liquid predistribution openings (8) which open into the column (2);
- means (5, 5A, 5B, 25, 29) for feeding the primary distributor (3) with liquid at a considerably higher pressure than the internal pressure of the column; and
- a secondary distributor (4) which occupies substantially the entire cross section of the column, which has a gas overhead in communication with the internal space of the column and which is subdivided by partitions (13, 17) into a plurality of compartments (16), each compartment receiving liquid coming from at least one of the said openings (8) of the primary distributor (3), this secondary distributor (4) having a bottom (9) provided with orifices (12) for the fine distribution of the liquid over practically the entire cross section of the column, the number of these orifices being very much greater than the number of openings (8) of the primary distributor.

2. Distributor according to Claim 1, **characterized in that** each compartment (16) receives liquid from a single opening (8) of the primary distributor (3).

3. Distributor according to Claim 1 or 2, **characterized in that** all the compartments (16) have substantially the same area and the same degree of perforation.

4. Distributor according to any one of Claims 1 to 3, **characterized in that** the primary, distributor (3) comprises an array of perforated tubes (7).

5. Distributor according to Claim 4, **characterized in that** the array of perforated tubes (7) comprises a series of parallel perforated tubes, each of which is plumb with a straight duct (14) of the secondary distributor (4).

6. Distributor to any one of Claims 1 to 5, **characterized in that** the said feed means comprise a phase separator and a compression and feed line connected upstream to the lower part of this separator.

7. Distributor according to any one of Claims 1 to 6, **characterized in that** the feed means pass through a subcooler.

8. Distillation column, **characterized in that** it comprises a liquid distributor (1A, 1B) according to any one of Claims 1 to 7.

9. Distillation column according to Claim 8, **characterized in that** the said liquid distributor (1A) is placed at a first level of the column, especially at the top of the column, and **in that** the column includes, at least at a second level, liquid collection means (23) surmounting a second liquid distributor (1B) according to any one of Claims 1 to 7 and the primary distributor of which is connected to second means (27, 29) for compressing the liquid collected.

10. Use of a distillation column according to Claim 8 or 9 on a floating structure (18) such as a floating oil platform or a barge.
